# FASCICULE DE BREVET EUROPEEN

(11) **EP 0 633 163 B1**
(45) Date de publication et mention de la délivrance du brevet: **07.01.1999**
(21) Numéro de dépôt: 94401556.9
(22) Date de dépôt: 06.07.1994
(51) Int. Cl.: B60Q 1/26, F21Q 1/00

(54) **Feu de signalisation de véhicule automobile à diode électroluminescentes et bloc de feux de signalisation comprennant une pluralité de feux correspondants.**
Signalleuchte für ein Kraftfahrzeug mit Elektrolumineszenzdioden und Kombinationsleuchte mit derartigen Signalleuchten
Signal lamp for an automobile with electroluminescent diodes and signal lamp combination comprising such signal lamps

(30) Priorité: 07.07.1993 FR 9308338
(43) Date de publication de la demande: 11.01.1995
(73) Titulaire: VALEO VISION, 93000 Bobigny (FR)
(72) Inventeur: Montalan, Dominique, F-75009 Paris (FR); Durand, Dominique, F-03400 Yzeure (FR); Vin, Stéphane, F-89100 Sens (FR); Gasquet, Jean-Claude, F-89100 Saint-Clement (FR)
(74) Mandataire: Martin, Jean-Jacques

(56) Documents cités:
- EP-A- 0 326 668
- EP-A- 0 531 185
- DE-A- 3 916 875
- US-A- 4 733 335

## Description

La présente invention a trait d'une façon générale aux feux de signalisation de véhicules automobiles, et concerne plus particulièrement un feu de signalisation du type comprenant une pluralité de sources lumineuses individuelles à diode électroluminescente coopérant avec des aménagements optiques et un bloc de feux de signalisation comprennant une pluralité de feux correspondants.

Un tel feu est déjà connu dans la technique. Il impose toutefois le montage d'un grand nombre de sources électroluminescentes sur des supports, et le montage d'un nombre correspondant d'aménagements optiques, prévus au droit de chaque source pour obtenir une photométrie requise.

On comprend qu'un tel montage est long et fastidieux, et le prix de revient du feu obtenu est élevé.

On connaît par ailleurs par US-A-4 733 335, et en particulier par la forme de réalisation de ses figures 4 à 7, un feu de signalisation pour véhicule automobile tel que défini dans le préambule de la revendication 1 annexée.

Un tel feu connu présente cependant un certain nombre d'inconvénients :
- son montage est fastidieux, dans la mesure où toutes les diodes doivent être soudées successivement sur un circuit imprimé prévu à l'arrière de la plaque intérieure,
- dans le cas où l'une des diodes est défaillante, la réparation est longue est coûteuse dans la mesure où il faut la localiser, la dessouder du circuit imprimé et la remplacer par une diode neuve;
- cette réparation peut être effectuée certes en remplaçant l'ensemble du circuit imprimé, mais cette solution est également coûteuse et complexe, le retrait du circuit imprimé impliquant un démontage pratiquement complet du feu.

La présente invention vise à pallier ces inconvénients de l'état de la technique, en particulier, à simplifier la conception et le montage d'un tel feu de signalisation.

Elle propose à cet effet un feu de signalisation ayant les particularités de la revendication 1.

Certains aspects préférés mais facultatifs du feu de signalisation selon l'invention sont définis dans les revendications dépendantes 2 à 14.

L'invention concerne selon un autre aspect un bloc de feux de signalisation tel que défini dans la revendication 15.

Certains aspects préférés de ce bloc de feux de signalisation sont définis dans les revendications dépendantes 16 à 18.

D'autres aspects, buts et avantages de la présente invention apparaîtront mieux à la lecture de la description détaillée suivante d'un mode de réalisation préféré de celle-ci, donnée à titre d'exemple et faite en référence aux dessins annexés, sur lesquels:
la figure 1 est une vue schématique en coupe horizontale d'un bloc de feux de signalisation selon une forme de réalisation de la présente invention,
la figure 2 est une vue schématique en coupe verticale transversale du bloc de signalisation de la figure 1,
la figure 3 est une vue en coupe axiale d'un détail du bloc de feux des figures 1 et 2,
la figure 4 illustre graphiquement la répartition lumineuse obtenue avec un élément du bloc de feux de la présente invention,
les figures 5a et 5b illustrent un premier et un second exemple de branchement électrique des diverses sources d'un feu de signalisation réalisé selon l'invention, et
la figure 6 est une vue de face partielle d'un élément du bloc de feux des figures 1 et 2.

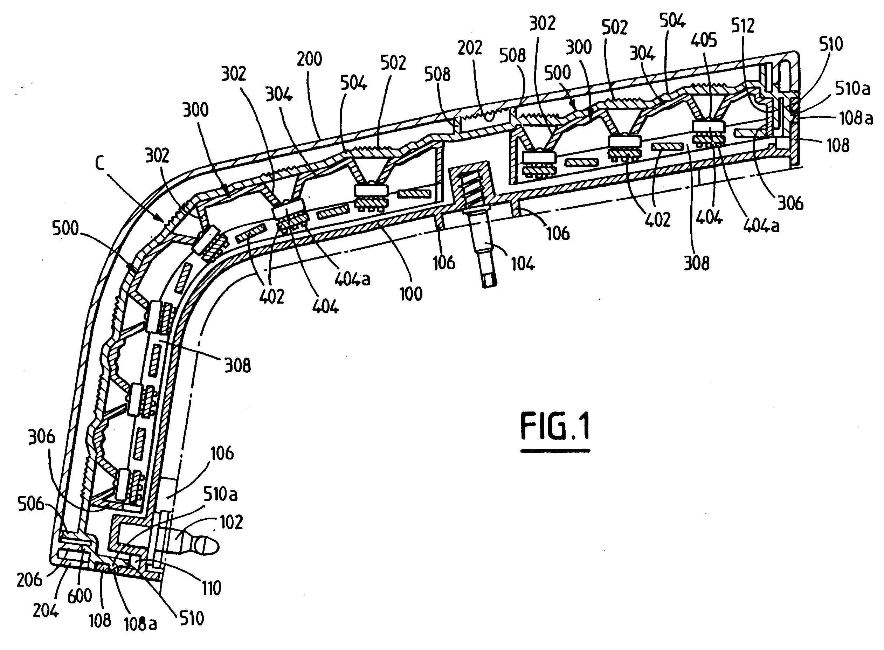

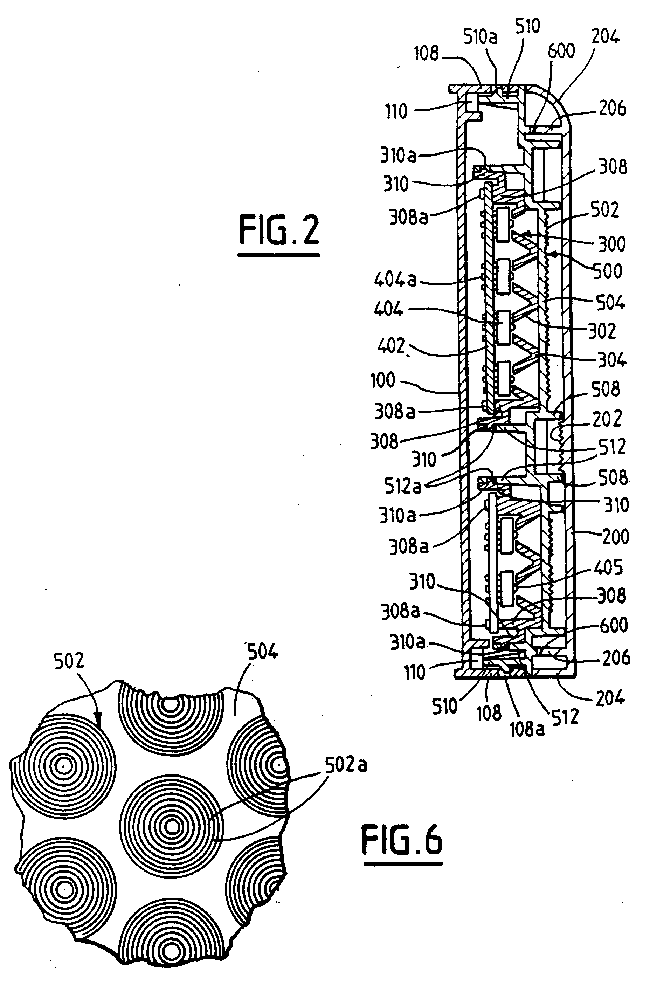

On notera préliminairement que, d'une figure à l'autre, des éléments ou parties identiques ou similaires sont désignés dans la mesure du possible par les mêmes signes de référence. On notera également que les directions "avant", "arrière" et analogues seront considérées sauf exception par rapport à la direction générale d'émission de la lumière (vers le haut sur la figure 1 et vers la droite sur la figure 2).

En référence tout d'abord aux figures 1 et 2, on a représenté un bloc de feux de signalisation arrière pour véhicule automobile qui est destiné classiquement à remplir diverses fonctions lumineuses (feu de position, feu stop, feu clignotant, feu de brouillard, ...) dans diverses zones spécifiques.

Le bloc comprend un socle 100 définissant avec un voyant 200 une cavité intérieure C d'épaisseur peu importante et généralement constante. Comme on l'observe en particulier sur la figure 1, le socle 100 et le voyant 200 peuvent être galbés à souhait pour épouser la région de coin arrière du véhicule (bloc de feux dit en retour d'aile).

Dans la cavité C sont disposées une ou plusieurs (en l'espèce quatre) plaques intérieures 300 qui, dans le cas présent, supportent chacune une pluralité de circuits imprimés 402 portant eux-mêmes une pluralité de diodes électroluminescentes 404, et présentent des aménagements particuliers au droit de chaque diode, et une plaque commune 500, extérieure, présentant au droit de chaque diode un dispositif optique.

On va maintenant décrire en détail chacun de ces éléments.

Une première plaque intérieure 300 (à gauche sur la figure 1) présente généralement une forme galbée correspondant à celle du socle 100 et du voyant 200 dans cette région. Cette plaque, réalisée d'un seul tenant par moulage de matière plastique, définit une pluralité de cavités tronconiques 302 dirigées vers le socle. Chaque cavité 302 présente en son fond une ouverture circulaire dont le diamètre est légèrement supérieur à celui d'une protubérance hémisphérique 405 constituant la partie d'émission de lumière d'une diode électroluminescente ou DEL 404 de type 〈〈Brewster〉〉. Une telle DEL est utilisée de façon classique en soi dans le domaine de la signalisation automobile et comprend un corps de contour généralement carré et de section axiale trapézoïdale, à partir duquel s'étendent, à l'opposé de la partie d'émission de lumière 405 disposée centralement, trois pattes de connexion 404a rectilignes et alignées.

La première plaque intérieure 300 comprend, entre les cavités 302, des parties de liaison 304 généralement lisses, qui peuvent éventuellement être traitées en surface comme on le verra en détail plus loin.

Une pluralité de DELs alignées verticalement sont montées et soudées sur un circuit imprimé commun 402, d'orientation également verticale, la plaque intérieure comprenant des moyens 308, 308a pour le montage d'une pluralité de tels circuits imprimés côte-à-côte, définissant chacun une colonne de DELs, par leurs extrémités supérieure et inférieure, comme on le verra en détail plus loin.

De préférence, au niveau de chaque circuit imprimé 402, les diverses DELs 〈〈Brewster〉〉 404 sont électriquement reliées ensemble en parallèle. Une liaison série ou série/parallèle est bien entendu également possible. A cet effet, chaque circuit imprimé 402 comprend des pistes conductrices et des trous pour le passage des pattes 404a, qui sont soudées sur lesdites pistes.

Comme le montrent les figures 1 et 2, on prévoit de préférence une plaque intérieure 300 par fonction lumineuse à réaliser. En l'espèce, la figure 1 montre deux plaques 300 disposées côte-à-côte et la figure 2 montre deux plaques 300 disposées l'une au-dessus de l'autre, le bloc de feux comprenant ici quatre plaques 300.

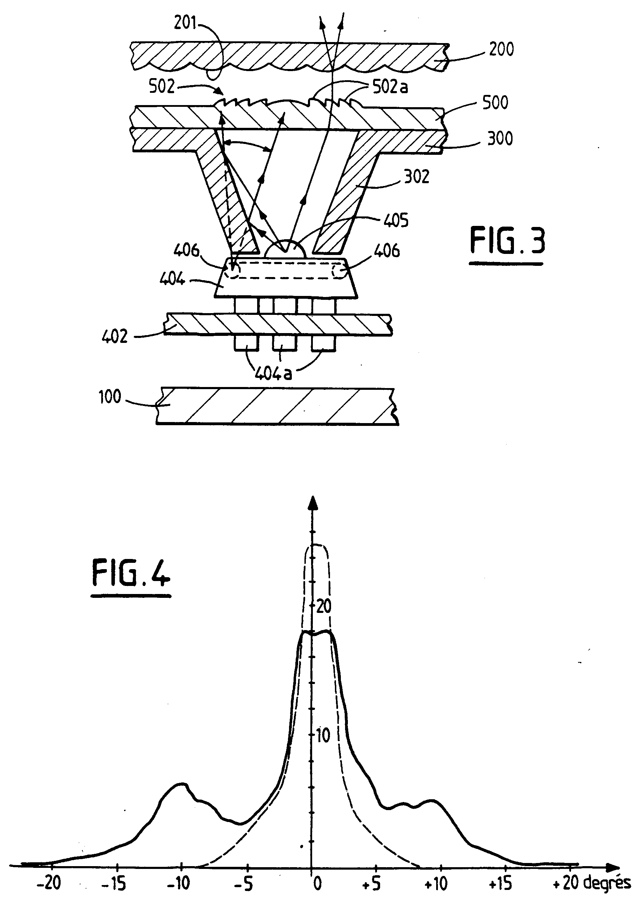

En revanche, on prévoit de préférence une plaque extérieure 500 commune pour l'ensemble des fonctions lumineuses, cette plaque présentant sensiblement la même étendue que le voyant 200. Cette plaque extérieure comprend, au droit de chaque cavité tronconique 302, des aménagements optiques destinés à concentrer le flux lumineux engendré par la DEL correspondante dans une direction déterminée. De préférence, chacun de ces aménagements est constitué par une lentille de Fresnel 502 généralement coaxiale avec la cavité 302, comprenant une pluralité d'élément prismatiques ou toriques concentriques 502a (voir figure 3). Comme illustré, on prévoit les échelons de Fresnel de préférence sur la surface extérieure de la plaque 500, côté voyant 200, de manière minimiser les pertes de flux lumineux classiquement rencontrées avec ce genre d'aménagement optique lorsque les échelons sont situés du côté de la lumière incidente.

Pour éviter l'accumulation de poussières et de salissures sur les lentilles de Fresnel 502, il est nécessaire s'assurer un certain degré d'étanchéité vis-à-vis de l'extérieur de l'espace défini entre la plaque extérieure 500 et le voyant 200. Comme on le verra en détail plus loin, cette étanchéité peut être assurée par une soudure périphérique 600 (soudure miroir, soudure aux ultrasons, ...) entre des bords en vis-à-vis de la plaque extérieure et du voyant. On crée de cette manière entre la plaque extérieure et le voyant, de façon indémontable, un volume parfaitement étanche qui permet d'éviter l'encrassement des échelons de Fresnel de la plaque 500 et des billes du voyant, et le cas échéant d'autres aménagements optiques tels qu'éléments catadioptriques.

Entre les lentilles 502, la plaque extérieure 500 comprend des parties de liaison 504 généralement lisses et dont le profil est choisi d'une part pour que la plaque 500 épouse à une certaine distance régulière la forme du voyant 200, et d'autre part pour assurer une complémentarité de formes entre ces parties de liaison 504 et les parties de liaison homologues 304 de la plaque intérieure 300, à des fins expliquées plus loin.

Comme le montre en particulier la figure 6, les DELs 404, les cavités 302 et les lentilles de Fresnel 502 sont disposés en quinconce, les éléments étant alignés en colonnes verticales mais étant alternativement décalés vers le haut et vers le bas lorsqu'on se déplace horizontalement.

Avantageusement, le voyant 200 comporte sur sa face intérieure des éléments de diffusion du flux lumineux incident, constitués par exemple, d'une manière classique en soi, de billes 201 (voir figure 3).

On va maintenant décrire en détail la façon dont les divers éléments du bloc de feux coopèrent mécaniquement les uns avec les autres pour assurer l'intégrité dudit bloc.

Le socle 100 porte du côté postérieur des organes 102, 104 de fixation sur une carrosserie, de façon classique en soi, un joint de carrosserie 106 étant interposé entre le socle et ladite carrosserie.

Le socle comporte en outre, s'étendant vers l'avant dans la région de sa périphérie, des pattes 108 dans une région intermédiaire desquelles sont pratiquées des ouvertures 108a. Dans des emplacements correspondants de la périphérie de la plaque extérieure 500, celle-ci comporte des pattes 510 s'étendant vers l'arrière le long des pattes 108 et du côté intérieur de celles-ci, ces pattes 510 comportant chacune une dent d'encliquetage généralement triangulaire 510a destinée à s'engager élastiquement dans l'ouverture associée 108a pour assurer le montage de la plaque 500 sur le socle 100 en autorisant le démontage.

En outre, la plaque 500 comporte également dans sa périphérie un renfoncement, défini en partie par une nervure ou muret périphérique 506 en saillie vers l'avant, qui reçoit une partie de pied périphérique du voyant 200. Cette partie de pied comprend une jupe extérieure 204 et une jupe intérieure 206 essentiellement perpendiculaire au plan du voyant à sa périphérie. La soudure 600 est réalisée entre le bord libre de la jupe intérieure 206 et la surface d'une petite nervure formée dans le renfoncement dans l'alignement de ladite jupe 206.

La fixation du voyant 200 sur la plaque 500 est réalisée par exemple par collage ou soudure au niveau de la jupe extérieure 204.

Comme le montre bien la figure 2, la fixation de chaque plaque intérieure 300 sur la plaque extérieure commune 500 est réalisée en prévoyant, notamment dans la région des bords supérieur et inférieur de chaque plaque 300, des pattes 310 s'étendant vers l'arrière et portant en saillie latéralement une dent d'encliquetage généralement triangulaire 310a. Dans des régions correspondantes de la plaque 500 sont formées d'autres pattes 512 s'étendant également vers l'arrière et dans lesquelles sont ménagées des ouvertures 512a destinées à l'engagement élastique des dents 310a.

Les dents 310a et les ouvertures associées 512a sont positionnées de telle sorte que les parties de liaison 304 des plaques 300 et les parties de liaison 504 de la plaque 500 soient positionnées sensiblement les unes contre les autres, comme illustré. On observera que les parties homologues 304, 504 présentent une complémentarité de formes, ce qui permet d'une part d'assurer que les plaques 300, 500 soient bien disposées l'une contre l'autre sur toute l'étendue du bloc de feux, et d'autre part de faciliter leur positionnement mutuel lors de l'encliquetage des plaques 300 par leurs bords. Il est en effet important que les lentilles 502 occupent des positions très bien définies par rapport aux ensembles DEL/cône homologues, en particulier dans lesquelles le foyer de chaque lentille soit voisin de la source et l'axe de chaque lentille soit confondu avec celui du cône.

Les divers circuits imprimés 402 sur lesquels sont préalablement soudées les DELs 404 sont montés sur les plaques intérieures 300 respectives par des aménagements que l'on va maintenant décrire. Dans ses régions de bord supérieur et inférieur, chaque plaque 300 comporte une aile 308 dirigée vers l'arrière. Chaque aile comprend à intervalles généralement réguliers une encoche rectangulaire dont la forme est adaptée à la section de chaque circuit imprimé, chaque encoche étant ouverte vers l'arrière par un passage délimité par deux dents élastiques 308a. Les régions supérieure et inférieure des circuits imprimés 402 sont simplement encliquetées dans ces encoches, en franchissant les dents, leur positionnement en direction verticale, étant tel que les parties protubérantes 405 soient engagées dans les ouvertures de fond des parties coniques 302. Après le montage, cet engagement des parties 405 dans les ouvertures de fond des cavités coniques 302 assure le maintien des circuits imprimés 402 en direction verticale.

De façon préférée, l'assemblage d'un bloc de feux tels que décrit ci-dessus s'effectue par les opérations successives suivantes :
- soudage des diodes Brewster 404 sur les circuits imprimés 402;
- montage des circuits imprimés 402 dans les plaques intérieures respectives 300, par encliquetage ou encore par soudure;
- parallèlement aux deux opérations ci-dessus, soudure périphérique de la plaque extérieure 500 et du voyant 200;
- montage des diverses plaques intérieures 300 sur la plaque extérieure 500, également par encliquetage; et
- montage de l'ensemble ainsi obtenu sur le socle 100, par encliquetage de la plaque 500.

En référence tout particulièrement à la figure 1, on observe que la plaque extérieure 500 comporte, en saillie vers l'avant, des murets périphériques 506 et des murets intermédiaires 508 dont l'étendue est telle qu'ils viennent au contact de la face intérieure du voyant 200. Pour renforcer la fixation du voyant, un collage ou un soudage peut également être prévu à ce niveau.

Les murets 508 ont également pour objet d'assurer une bonne séparation optique entre les diverses fonctions lumineuses engendrées, en évitant que des rayons lumineux issus de la plaque extérieure 500 ne viennent déborder latéralement vers la plage éclairante voisine.

A cet effet, les murets 508 sont pourvus d'un revêtement opaque ou réfléchissant (dépôt d'aluminium sous vide).

On observe également sur la figure 1 qu'un espace libre existe entre les plages éclairantes correspondant aux deux plaques intérieures 300. Dans ce cas, les murets 508 sont avantageusement utilisés pour définir, conjointement avec la région du voyant qu'ils délimitent et avec la région de la plaque extérieure 500 située entre eux, un espace généralement fermé. Dans cet espace sont formés, d'un seul tenant avec le voyant 200, des trièdres 202 de rétro-réflexion catadioptrique. Grâce à la cavité fermée définie dans cette région par la plaque extérieure 500, ces trièdres sont à l'abri de la poussière et des salissures, conformément aux règlements.

De façon avantageuse, la partie de la plaque 500 située au droit du catadioptre 202 peut être pourvue d'une valve de respiration ou analogue (non représentée), permettant d'éviter que les phénomènes de dilatation de l'air enfermé dans la cavité anti-poussière ne viennent solliciter le voyant 200 ou la plaque 500 pourvue de ses murets 508.

On va maintenant décrire en détail en référence à la figure 3 la géométrie des cônes 302 formés dans la plaque 300.

On observera tout d'abord qu'une diode 〈〈Brewster〉〉 présente un cône d'émission lumineuse essentiellement constant, dont le demi-angle au sommet est généralement de l'ordre de 50°.

Chaque cavité conique 302 peut être revêtue d'une couche réfléchissante (par exemple par aluminage) ou partiellement réfléchissante et le demi-angle au sommet de chaque cône 302 est choisi sensiblement inférieur au demi-angle au sommet du cône d'émission, et par exemple de l'ordre de 30°. De cette manière, la réflexion de la partie extérieure du rayonnement de la diode sur le cône 302 crée une source lumineuse virtuelle de forme annulaire et concentrique avec l'axe commun de la diode 404 et du cône 302. Cette source virtuelle est indiquée en 406 sur la figure 3.

Grâce à cette disposition, on rend le flux lumineux aussi bien en entrée qu'en sortie de la plaque extérieure 500 beaucoup plus homogène en matière de répartition angulaire. Plus précisément, on atténue la différence entre l'éclairement obtenu, au niveau de la face d'entrée de la plaque extérieure 500, respectivement dans l'axe du cône 302 et avec une inclinaison par rapport à cet axe.

La figure 4 illustre graphiquement en traits pleins l'intensité lumineuse, exprimée en candélas, en fonction de l'angle, l'angle "0" correspondant à l'axe du cône. On note la présence de deux "bosses" latérales correspondant à l'angle moyen d'émission de la source virtuelle annulaire décrite ci-dessus (environ ±10°).

On a illustré également en traits tiretés, pour comparaison, l'éclairement qui serait obtenu avec une source de type 〈〈Brewster〉〉 et un cône dont l'angle serait voisin de l'angle d'émission de la source.

On comprend qu'avec cette disposition, l'aspect de la plage éclairante lorsque le feu est allumé et que l'on se déplace devant celui-ci reste bien homogène. On comprend également que le travail de diffusion requis pour les billes 201 est moindre, ce qui simplifie la réalisation du voyant 200.

En variante, les cônes 302 peuvent être remplacés par des renfoncements évasés par exemple pyramidaux. Dans ce cas, chacune des quatre faces planes du renfoncement définit une source virtuelle généralement ponctuelle, et l'effet obtenu est similaire à celui décrit plus haut en référence à un renfoncement conique.

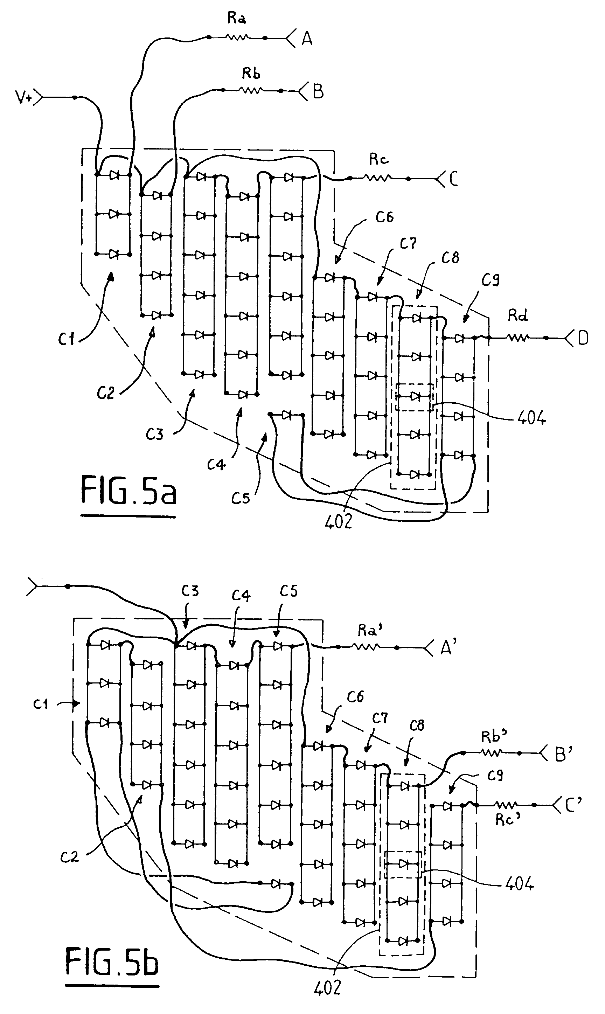

On a représenté sur les figures 5a et 5b, sous forme essentiellement électrique, les diverses DELs de l'un des feux de signalisation d'un bloc de feux réalisé selon la présente invention. Comme on l'observe, la plage éclairante (contour tireté) est de forme complexe, et il est prévu neuf circuits imprimés verticaux 402, côte-à-côte, comportant respectivement 3, 4, 6, 6, 7, 5, 5, 5 et 4 DELs disposées selon des colonnes notées C1 à C9.

Dans tous les circuits imprimés 402 à l'exception de celui de la colonne C5, les DELs sont reliées les unes aux autres en parallèle. Dans le circuit imprimé de la colonne C5, les cinq DELs du haut sont reliées en parallèle, tandis que la DEL du bas en est séparée. Les points noirs représentent des bornes des circuits imprimés pour leur câblage.

De façon préférée, les 45 DELs du feu sont reliées à une source d'alimentation appropriée selon un montage parallèle ou série-parallèle.

Dans le cas de la figure 5a, les DELs de la colonne C1 sont montées entre une tension d'alimentation V+ et un point A, avec une résistance série Ra interposée sur le trajet. Les DELs de la colonne C2 sont montées entre la tension V+ et un point B, avec interposition d'une résistance Rb. Les DELs en parallèle des colonnes C3 à C5 sont montées en série entre la tension V+ et un point C, avec interposition d'une résistance Rc. Enfin les DELs en parallèle des colonnes C6 à C9 sont montées en série entre la tension V+ et un point D, avec une résistance série Rd. La DEL isolée de la colonne C5 est reliée en parallèle avec les DELs de la colonne C9 par câblage.

On observe que, dans chaque branche où il existe un montage mixte (ici les deux dernières), le nombre de DELs en parallèle est constant (respectivement six et cinq). De cette manière, il suffit de choisir des valeurs appropriées pour les résistances Ra à Rd pour obtenir au niveau de chaque DEL un éclairement constant.

Les points A, B, C et D sont reliés à la masse par un câblage additionnel (non illustré).

Un montage électrique tel que décrit ci-dessus est avantageux pour deux raisons. Tout d'abord, si un élément DEL est défaillant, il est le seul à ne pas émettre de lumière, et simplement les autres DELs du même montage parallèle vont émettre une quantité de lumière légèrement plus importante. Ensuite, si une défaillance se produit au niveau d'un câble de raccordement ou d'une résistance, seul le groupe de DELs situé dans la branche concernée s'éteint, les DELs des autres groupes restant allumées. De cette manière, une quantité de lumière encore substantielle est produite et une signalisation suffisante pour assurer la sécurité est encore assurée.

La figure 5b illustre une variante de branchement à partir de la même disposition de circuits imprimés et de diodes.

Dans ce cas, les DELs en parallèle des colonnes C1, C2 et C9 sont montées en série, avec une résistance Rc', entre V+ et un point C'. Par un câblage approprié, la DEL isolée de la colonne C5 est ramenée en parallèle avec celles de la colonne C1. En outre, les DELs en parallèle des colonnes C3 à C5 sont montées en série, avec une résistance Ra', entre V+ et un point B'. Enfin les DELs en parallèle des colonnes 6, 7 et 8 sont montées en série, avec une résistance Rb', entre V+ et un point B'.

Ce montage conserve les caractéristiques et avantages de celui de la figure 5a en matière d'homogénéité de l'éclairement des sources individuelles et de comportement face aux défaillances.

On notera que les résistances peuvent avantageusement être prévues sur les circuits imprimés.

En variante, les DELs d'une fonction lumineuse données peuvent être reliées ensemble selon un montage série-parallèle.

Normalement, la couleur de la fonction lumineuse produite est donnée par les DELs associées à cette fonction (généralement rouges ou ambres). Dans ces conditions, la plaque extérieure 500 et le voyant 200 peuvent être réalisés en matière plastique transparente incolore.

En variante, on peut bien entendu prévoir de teinter l'un et/ou l'autre de ces éléments, à condition que les longueurs d'onde autorisées à les traverser soient bien contenues dans le spectre d'émission des DELs considérées.

On notera par ailleurs que, pour donner au feu un aspect homogène lorsqu'il est éteint, on peut prévoir sur les parties de liaison de la plaque intérieure 300 ou de la plaque extérieure 500 des aménagements destinés à donner au feu dans ces régions un aspect proche de celui des aménagements optiques 502. Il peut s'agir par exemple d'un aluminage, d'un grenage, d'une peinture de teinte neutre, etc...

## Revendications

1. Feu de signalisation pour véhicule automobile comprenant :
- une pluralité de sources lumineuses individuelles à diode électroluminescente (404) coopérant avec des aménagements optiques (502),
- une plaque intérieure commune (300) comprenant un ensemble de cavités (302) évasées vers l'extérieur et présentant dans leur fond une ouverture à travers laquelle une diode électroluminescente (404) respective émet de la lumière,
- des moyens à circuit imprimé (402) sur lesquels sont montées lesdites diodes électroluminescentes,
- des moyen (308) prévus sur ladite plaque intérieure commune pour le montage des moyens à circuit imprimé,
- une plaque extérieure commune (500) disposée sensiblement contre une face extérieure de ladite plaque intérieure et comportant au droit de chaque cavité un aménagement optique (502) de traitement de la lumière issue de la diode électroluminescente correspondante,
- un voyant de fermeture (200) situé à l'extérieur de la plaque extérieure, caractérisé en ce que les moyens à circuit imprimé comprennent une pluralité de circuits imprimés séparés (402) de forme allongée sur lesquels sont respectivement montées une pluralité de diodes électroluminescentes (404) alignées dans la direction longitudinale de leur circuit imprimé respectif, et en ce que les moyens de montage des circuits imprimés sont constitués par des moyens (308) pour le montage individuel desdits circuits imprimés parallèlement les uns aux autres par rapport à la direction longitudinale desdits circuits et côte-à-côte transversalement à cette direction, en les retenant par leurs extrémités.

2. Feu de signalisation selon la revendication 1, caractérisé en ce qu'il comprend en outre un socle (100) définissant avec le voyant (200) une cavité d'épaisseur régulière, et en ce que la plaque intérieure (300) et la plaque extérieure (500) sont reçues dans ladite cavité.

3. Feu de signalisation selon la revendication 2, caractérisé en ce qu'il est prévu des moyens (310, 512) de montage périphérique de la plaque intérieure (300) sur la plaque extérieure (500).

4. Feu de signalisation selon la revendication 3, caractérisé en ce qu'il est prévu des moyens (510, 108) de montage périphérique de la plaque extérieure (500) sur le socle (100).

5. Feu de signalisation selon la revendication 3 ou 4, caractérisé en ce que les moyens (310, 512; 510, 108) de montage périphérique comprennent des moyens à encliquetage élastique.

6. Feu de signalisation selon la revendication 4 ou 5, caractérisé en ce qu'il est prévu des moyens de montage périphérique (204, 206) du voyant (200) sur la plaque extérieure (500).

7. Feu de signalisation selon l'une des revendications 1 à 6, caractérisé en ce que lesdits moyens de montage des circuits imprimés comprennent deux ailes (308) prévues le long de deux bords opposés de ladite plaque intérieure (300) et dans lesquelles sont formées des encoches recevant les extrémités opposées desdits circuits imprimés.

8. Feu de signalisation selon l'une des revendications 1 à 7, caractérisé en ce que les diodes électroluminescentes (404) montées sur un même circuit imprimé (402) sont reliées électriquement entre elles en parallèle.

9. Feu de signalisation selon la revendication 8, caractérisé en ce qu'une pluralité de circuits imprimés (402) sont reliés en série aux bornes d'une source d'alimentation, avec interposition série d'une résistance (Ra-Rd).

10. Feu de signalisation selon l'une des revendications 1 à 9, caractérisé en ce que lesdites cavités (302) de la plaque intérieure et lesdits aménagements optiques (502) de la plaque extérieure sont séparés respectivement par des parties de liaison (304; 504), et en ce que les parties de liaison de la plaque intérieure et les parties de liaison de la plaque extérieure présentent une complémentarité de formes.

11. Feu de signalisation selon la revendication 10, caractérisé en ce que les parties de liaison (304; 504) de la plaque intérieure et/ou de la plaque extérieure comportent un traitement de décor.

12. Feu de signalisation selon l'une des revendications 1 à 11, caractérisé en ce que les aménagements optiques consistent en des lentilles de Fresnel (502).

13. Feu de signalisation selon la revendication 12, caractérisé en ce que chaque lentille de Fresnel (502) comprend des aménagements concentriques ménagés sur la face de la plaque extérieure (500) tournée vers le voyant (200).

14. Feu de signalisation selon la revendication 13, caractérisé en ce qu'il est prévu des moyens d'étanchéité périphérique (206, 600) entre le voyant (200) et la plaque extérieure (500).

15. Bloc de feux de signalisation, caractérisé en ce qu'il comprend une pluralité de feux de signalisation selon l'une des revendications 1 à 14, en ce qu'il est prévu une plaque intérieure (300) pour chaque feu de signalisation et en ce qu'il est prévu une plaque extérieure commune (500) pour au moins deux feux de signalisation adjacents.

16. Bloc de feux de signalisation selon la revendication 15, caractérisé en ce qu'il est prévu entre la plaque extérieure (500) et le voyant des moyens formant murets (506, 508) pour individualiser les plages éclairantes de chaque feu de signalisation.

17. Bloc de feux de signalisation selon l'une des revendications 15 et 16, caractérisé en ce qu'il est prévu un espace entre deux feux de signalisation adjacents, en ce qu'il est prévu entre la plaque extérieure (500) et le voyant (200) des moyens formant murets pour définir entre la plaque extérieure et le voyant une cavité fermée, et en ce que des éléments de rétroréflexion catadioptrique (202) sont formés sur le voyant sur sa face située à l'intérieur de la cavité.

18. Bloc de feux de signalisation selon la revendication 16 ou 17, caractérisé en ce que les moyens formant murets (506, 508) sont réalisés d'un seul tenant avec la plaque extérieure (500) et font saillie vers l'extérieur à partir de celle-ci.

## Claims

1. A signalling light for a motor vehicle, the light comprising:
a plurality of individual light-emitting diode light sources (404) co-operating with optical arrangements (502);
a common inner plate (300) having a set of outwardly-flaring cavities (302) and having openings at their small ends through which respective LEDs (404) emit light;
printed circuit means (402) onto which said LEDs are mounted;
means (308) provided on said common inner plate for mounting the printed circuit means;
a common outer plate (500) disposed substantially against the outside face of said inner plate and including an optical arrangement (502) over each cavity for processing the light from the corresponding LED; and
a closure cover (200) situated outside the outer plate,
the light being characterized in that the printed circuit means comprise a plurality of separate elongate printed circuits (402) on which respective pluralities of LEDs (404) are mounted, aligned in the longitudinal direction of their respective printed circuit, and in that the means for mounting the printed circuits are constituted by means (308) for individually mounting said printed circuits parallel to one another relative to the longitudinal direction of said circuits and side-by-side transversely to said direction, by holding them by their ends.

2. A signalling light according to claim 1, characterized in that it further includes a base (100) co-operating with the cover (200) to define a cavity of uniform thickness, and in that the inner plate (300) and the outer plate (500) are received in said cavity.

3. A signalling light according to claim 2, characterized in that peripheral assembly means (310, 512) are provided for assembling the inner plate (300) to the outer plate (500).

4. A signalling light according to claim 3, characterized in that peripheral assembly means (510, 108) are provided for assembling the outer plate (500) to the base (100).

5. A signalling light according to claim 3 or 4, characterized in that the peripheral assembly means (310, 512; 510, 108) comprise resilient snap-fastening means.

6. A signalling light according to claim 4 or 5, characterized in that peripheral assembly means (204, 206) are provided for assembling the cover (200) on the outer plate (500).

7. A signalling light according to any one of claims 1 to 6, characterized in that said assembly means for the printed circuits comprise two webs (308) extending along two opposite edges of said inner plate (300) and in which notches are formed for receiving the opposite ends of said printed circuits.

8. A signalling light according to any one of claims 1 to 7, characterized in that the LEDs (404) mounted on a common printed circuit (402) are connected together electrically in parallel.

9. A signalling light according to claim 8, characterized in that a plurality of printed circuits (402) are connected in series between the terminals of a power supply, with a resistance (Ra-Rd) being connected in series therewith.

10. A signalling light according to any one of claims 1 to 9, characterized in that said cavities (302) of the inner plate, and said optical arrangements (502) of the outer plate are held apart by respective link portions (304; 504), and in that the link portions of the inner plate and the link portions of the outer plate present shapes that are complementary.

11. A signalling light according to claim 10, characterized in that the link portions (304; 504) of the inner plate and/or of the outer plate include appearance treatment.

12. A signalling light according to any one claims 1 to 11, characterized in that the optical arrangements are constituted by Fresnel lenses (502).

13. A signaling light according to claim 12, characterized in that each Fresnel lens (502) comprises concentric arrangements formed on the face of the outer plate (500) that faces the cover (200).

14. A signalling light according to claim 13, characterized in that peripheral sealing means (206, 600) are provided between the cover (200) and the outer plate (500).

15. A signalling light block, characterized in that it comprises a plurality of signalling lights according to any one of claims 1 to 14, in that an inner plate (300) is provided for each signalling light, and in that a common outer plate (500) is provided for at least two adjacent signalling lights.

16. A signalling light block according to claim 15, characterized in that between the outer plate (500) and the cover, wall-forming means (506, 508) are provided to separate the areas illuminated by each signalling light.

17. A signalling light block according to claim 15 or 16, characterized in that a space is provided between two adjacent signalling lights, in that wall-forming means are provided between the outer plate (500) and the cover (200) to define a closed cavity between the outer plate and the cover, and in that catadioptric retro-reflection elements (202) are formed on the cover on its face facing the inside of the cavity.

18. A signalling light block according to claim 16 or 17, characterized in that the wall-forming means (506, 508) are made integrally with the outer plate (500) and project outwardly therefrom.

## Patentansprüche

1. Signalleuchte für Kraftfahrzeuge, umfassend:
- eine Mehrzahl von einzelnen Lichtquellen mit Elektrolumineszenzdioden (404), die mit optischen Anordnungen (502) zusammenwirken,
- eine gemeinsame Innenplatte (300) mit einer Gesamtheit von nach außen erweiterten Hohlräumen (302), die in ihrem Boden eine Öffnung aufweisen, durch die eine entsprechende Elektrolumineszenzdiode (404) Licht abstrahlt,
- Mittel mit gedruckten Schaltungen (402), auf denen die besagten Elektrolumineszenzdioden montiert sind,
- Mittel (308), die auf der besagten gemeinsamen Innenplatte für die Montage der Mittel mit gedruckten Schaltungen vorgesehen sind,
- eine gemeinsame Außenplatte (500), die in etwa an einer Außenfläche der besagten Innenplatte angeordnet ist und in Höhe jedes Kohlraums eine optische Anordnung (502) zur Behandlung des von der entsprechenden Elektrolumineszenzdiode kommenden Lichts umfaßt,
- eine Abdeckscheibe (200), die außerhalb der Außenplatte angeordnet ist,
**dadurch gekennzeichnet,** daß die Mittel mit gedruckten Schaltungen eine Mehrzahl getrennter gedruckter Schaltungen (402) mit länglicher Form umfassen, auf denen jeweils eine Mehrzahl von in der Längsrichtung ihrer jeweiligen gedruckten Schaltung ausgerichteten Elektrolumineszenzdioden (404) montiert sind, und daß die Mittel für die Montage der gedruckten Schaltungen aus Mitteln (308) bestehen, um die besagten gedruckten Schaltungen einzeln parallel zueinander im Verhältnis zur Längsrichtung der besagten Schaltungen und nebeneinander quer zu dieser Richtung zu montieren, wobei sie durch ihre Enden gehalten werden.

2. Signalleuchte nach Anspruch 1, **dadurch gekennzeichnet,** daß sie außerdem einen Sockel (100) umfaßt, der zusammen mit der Abdeckscheibe (200) einen Hohlraum mit gleichmäßiger Dicke definiert, und daß die Innenplatte (300) und die Außenplatte (500) in dem besagten Hohlraum aufgenommen sind.

3. Signalleuchte nach Anspruch 2, **dadurch gekennzeichnet,** daß Mittel (310, 512) für die Umfangsmontage der Innenplatte (300) auf der Außenplatte (500) vorgesehen sind.

4. Signalleuchte nach Anspruch 3, **dadurch gekennzeichnet,** daß Mittel (510, 108) für die Umfangsmontage der Außenplatte (500) auf dem Sockel (100) vorgesehen sind.

5. Signalleuchte nach Anspruch 3 oder 4, **dadurch gekennzeichnet,** daß die Mittel (310, 512; 510, 108) für die Umfangsmontage Mittel zur elastischen Verrastung umfassen.

6. Signalleuchte nach Anspruch 4 oder 5, **dadurch gekennzeichnet,** daß Mittel (204, 205) für die Umfangsmontage der Abdeckscheibe (200) auf der Außenplatte (500) vorgesehen sind.

7. Signalleuchte nach einem der Ansprüche 1 bis 6, **dadurch gekennzeichnet,** daß die besagten Mittel für die Montage der gedruckten Schaltungen zwei Schenkel (308) umfassen, die entlang zweier gegenüberliegender Kanten der besagten Innenplatte (300) vorgesehen sind und in denen Ausnehmungen ausgebildet sind, die die gegenüberliegenden Enden der besagten gedruckten Schaltungen aufnehmen.

8. Signalleuchte nach einem der Ansprüche 1 bis 7, **dadurch gekennzeichnet,** daß die Elektrolumineszenzdioden (404), die auf einer gleichen gedruckten Schaltung (402) montiert sind, elektrisch durch Parallelschaltung miteinander verbunden sind.

9. Signalleuchte nach Anspruch 8, **dadurch gekennzeichnet,** daß eine Mehrzahl von gedruckten Schaltungen (402) unter Einfügung einer Reihe von Widerständen (Ra-Rd) in Reihe an die Klemmen einer Stromversorgungsquelle angeschlossen sind.

10. Signalleuchte nach einem der Ansprüche 1 bis 9, **dadurch gekennzeichnet,** daß die besagten Hohlräume (302) der Innenplatte und die besagten optischen Anordnungen (502) der Außenplatte jeweils durch Verbindungsteile (304; 504) getrennt sind und daß die Verbindungsteile der Innenplatte und die Verbindungsteile der Außenplatte formschlüssig ausgeführt sind.

11. Signalleuchte nach Anspruch 10 , **dadurch gekennzeichnet,** daß die Verbindungsteile (304; 504) der Innenplatte und/oder der Außenplatte eine Zierbehandlung aufweisen.

12. Signalleuchte nach einem der Ansprüche 1 bis 11, **dadurch gekennzeichnet,** daß die optischen Anordnungen aus Fresnel-Linsen (502) bestehen.

13. Signalleuchte nach Anspruch 12 , **dadurch gekennzeichnet,** daß jede Fresnel-Linse (502) konzentrische Anordnungen umfaßt, die auf der zur Abdeckscheibe (200) gerichteten Fläche der Außenplatte (500) ausgebildet sind.

14. Signalleuchte nach Anspruch 13 , **dadurch gekennzeichnet,** daß zwischen der Abdeckscheibe (200) und der Außenplatte (500) Umfangsdichtungsmittel (206, 600) vorgesehen sind.

15. Kombinationsleuchte mit Signalleuchten , **dadurch gekennzeichnet,** daß sie eine Mehrzahl von Signalleuchten nach einem der Ansprüche 1 bis 14 umfaßt, daß eine Innenplatte (300) für jede Signalleuchte vorgesehen ist und daß eine gemeinsame Außenplatte (500) für mindestens zwei benachbarte Signalleuchten vorgesehen ist.

16. Kombinationsleuchte mit Signalleuchten nach Anspruch 15, **dadurch gekennzeichnet,** daß zwischen der Außenplatte (500) und der Abdeckscheibe Mittel vorgesehen sind, die Wände (506, 508) bilden, um die Leuchtfelder jeder Signalleuchte voneinander zu trennen.

17. Kombinationsleuchte mit Signalleuchten nach einem der Ansprüche 15 und 16, **dadurch gekennzeichnet,** daß ein Zwischenraum zwischen zwei benachbarten Signalleuchten vorgesehen ist, daß zwischen der Außenplatte (500) und der Abdeckscheibe (200) Mittel vorgesehen sind, die Wände bilden, um zwischen der Außenplatte und der Abdeckscheibe einen geschlossenen Hohlraum zu definieren, und daß katadioptrische Retroreflexionselemente (202) auf der Abdeckscheibe auf ihrer im Innern des Hohlraums angeordneten Fläche ausgebildet sind.

18. Kombinationsleuchte mit Signalleuchten nach Anspruch 16 oder 17 , **dadurch gekennzeichnet,** daß die als Wände (506, 508) ausgebildeten Mittel einstückig mit der Außenplatte (500) ausgeführt sind und von dieser aus nach außen vorstehen.
